(19) Europäisches Patentamt
European Patent Office
Office européen des brevets

(11) **EP 1 931 070 A1**

(12) **EUROPEAN PATENT APPLICATION**
published in accordance with Art. 153(4) EPC

(43) Date of publication:
**11.06.2008 Bulletin 2008/24**

(51) Int Cl.:
*H04J 15/00* (2006.01)  *H04B 7/04* (2006.01)
*H04B 7/12* (2006.01)  *H04B 7/26* (2006.01)
*H04J 11/00* (2006.01)

(21) Application number: **06822503.6**

(22) Date of filing: **27.10.2006**

(86) International application number:
**PCT/JP2006/321542**

(87) International publication number:
**WO 2007/049760 (03.05.2007 Gazette 2007/18)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.10.2005 JP 2005314621**

(71) Applicant: **MATSUSHITA ELECTRIC INDUSTRIAL CO., LTD.**
**Osaka 571-8501 (JP)**

(72) Inventors:
• **IMAI, Tomohiro**
**c/o Matsushita Electric Industrial Co.Ltd**
**2-1-61, Shiromi, Chuo-ku**
**Osaka 540-6207 (JP)**
• **HOSHINO, Masayuki**
**c/o Matsushita Electric Industrial Co.Ltd**
**2-1-61, Shiromi, Chuo-ku**
**Osaka 540-6207 (JP)**

• **YUDA, Yasuaki**
**c/o Matsushita Electric Industrial Co.Ltd**
**2-1-61, Shiromi, Chuo-ku**
**Osaka 540-6207 (JP)**
• **KIMURA, Ryohei**
**c/o Matsushita Electric Industrial Co.Ltd**
**2-1-61, Shiromi, Chuo-ku**
**Osaka 540-6207 (JP)**
• **KOBAYAKAWA, Yuichi**
**c/o Matsushita Electric Industrial Co.Ltd**
**2-1-61, Shiromi, Chuo-ku**
**Osaka 540-6207 (JP)**

(74) Representative: **Grünecker, Kinkeldey, Stockmair & Schwanhäusser Anwaltssozietät**
**Leopoldstrasse 4**
**80802 München (DE)**

(54) **TRANSMITTING DEVICE, RECEIVING DEVICE, TRANSMITTING METHOD, RECEIVING METHOD AND WIRELESS COMMUNICATION SYSTEM**

(57)    Provided is a transmitting device which improves a data rate while maintaining channel estimation accuracy, or improves channel estimation accuracy while maintaining a data rate, in a MIMO-OFDM system. In the transmitting device, a transmitting antenna information adding section (104) adds transmitting antenna information to a pilot signal by performing different phase rotation to the separate pilot signal by transmitting antenna by having a common pilot signal as a reference phase. A pilot arranging section (107) is previously provided with, as a conversion table, a corresponding relationship between combination information of the transmitting antenna and a subcarrier to be used for transmission of the pilot signal and control information. The pilot arranging section (107) allocates the pilot signal outputted from the transmitting antenna information adding section (104) to the subcarrier to have the combination information in accordance with the control information.

FIG.2

**Description**

Technical Field

The present invention relates to a transmitting apparatus, a receiving apparatus, a transmission method, a reception method and a wireless communication system in a MIMO-OFDM system adopting MIMO (Multiple Input Multiple Output) technique and OFDM (Orthogonal Frequency Division Multiplex) technique.

Background Art

In the field of wireless cellular systems, which are represented by, for example, mobile phones, service modes become diverse, and transmitting large capacity data such as still images and movies in addition to voice data is in demand in recent years. On the other hand, a MIMO communication system which has high spectrum efficiency is studied actively.

SDM (Space Division Multiplex) scheme is one of techniques to improve transmission rate in MIMO communication systems. SDM scheme refers to transmitting different signals from a plurality of antennas at the same time and demultiplexing the signals at the receiving side. Incidentally, channel information is necessary upon demultiplexing signals.

Channel information can be estimated by using pilot symbols which are known information, at the receiving side, but there is a trade-off relationship between data rate and accuracy of channel estimation. That is, if the number of pilot symbols is small, a lot of data can be transmitted, but sufficient accuracy of channel estimation is not expected. In addition, if the number of pilot symbols is great, sufficient accuracy of channel estimation is expected, but data rate decreases accordingly. Consequently, a technique is demanded whereby data rate and accuracy channel of estimation are compatible.

As for a technique of being compatible between data rate and accuracy of channel estimation, a method for modulating pilot symbols and carrying information is disclosed in Non-patent document 1. This method performs differential modulation by providing a phase difference between the pilots of neighboring subcarriers at the transmitting side, and detects the phase difference between the pilots of neighboring subcarriers at the receiving side. This determines the end of the pilot period. With this method, if the phase variation between the channels of neighboring subcarriers is less than 180 degrees, this method does not influence channel estimation.

Non-patent Document 1 : EGASHIRA Yoshimasa et al., "A study on preamble structure for channel estimation of MIMO-OFDM system considering estimation of the number of streams" Society conference of IEICE, 2004, B-5-137

Disclosure of Invention

Problems to be Solved by the Invention

However, in the above-described method disclosed in Non-patent Document 1, the distance between signal points upon differential modulation becomes smaller when information carried upon pilots increases, and, consequently, there are problems that error rate of the information carried upon pilots increases and the accuracy of channel estimation performed using pilots is also deteriorated.

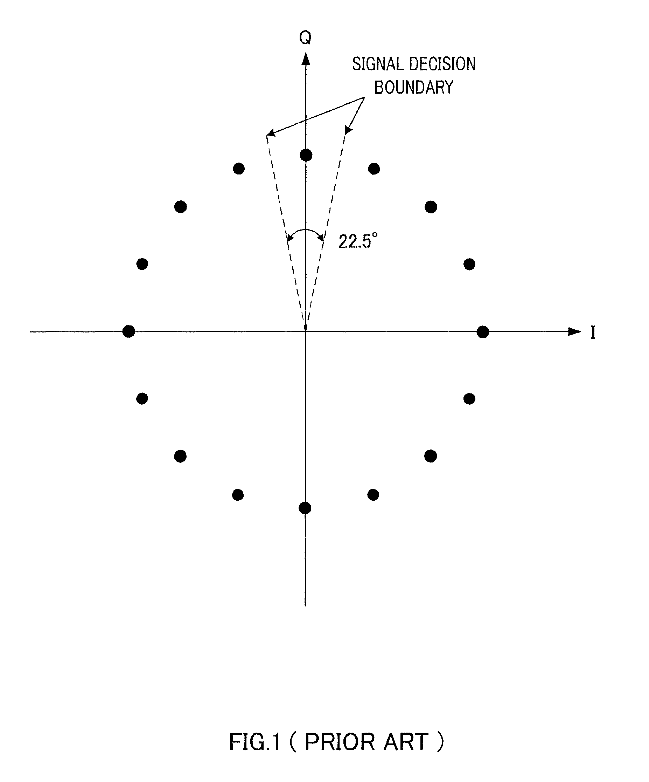

For example, if four-bit information is carried upon a pilot, 16 PSK is used for the modulation scheme and the signal point arrangement shown in FIG. 1 is employed. The phase difference between the signal points is only 22.5 degrees in this case, and, if the phase variation between the channels of neighboring subcarriers exceeds 22.5 degrees due to fast fading fluctuation, information carried upon pilots is not correctly detected. Moreover, a pilot cannot be regarded as a known signal, thereby deteriorating the accuracy of channel estimation.

It is therefore an object of the present invention to provide a transmitting apparatus, a receiving apparatus, a transmission method, a reception method and a wireless communication system for improving data rate while maintaining the accuracy of channel estimation or for improving the accuracy of channel estimation while maintaining data rate, in a MIMO-OFDM system.

Means for Solving the Problem

The transmitting apparatus of the present invention adopts a configuration including: a plurality of transmitting antennas; an antenna information adding section that assigns antenna information to pilot signals transmitted from the plurality of transmitting antennas respectively, the antenna information being attached to the pilot signals to identify the corresponding transmitting antennas; a subcarrier allocating section that allocates the pilot signals assigned the antenna information to subcarriers and combines the antenna information and the subcarriers to which the pilot signals are allocated; and a transmitting section that transmits another piece of information by a combination of the antenna information and the subcarriers to which the pilot signals are allocated.

The receiving apparatus of the present invention adopts a configuration including: a receiving section that receives pilot signals assigned antenna information, allocated to subcarriers, and transmitted from a plurality of transmitting antennas respectively, the antenna information being attached to the pilot signals to identify the corresponding transmitting antennas; an antenna specifying section that specifies transmitting antennas from which the pilot signals are transmitted from the antenna information; and a converting section that converts combination information of the specified transmitting antennas and the subcarriers to which the pilot signals are allocated, into another piece of information and acquires the another piece of information. Advantageous Effect of the Invention

According to the present invention, it is possible to improve data rate while maintaining the accuracy of channel estimation, or improve the accuracy of channel estimation while maintaining data rate in MIMO-OFDM system.

Brief Description of Drawings

FIG. 1 illustrates the pilot signal point arrangement adopting 16PSK according to the technique disclosed in Non-patent document 1;
FIG.2 is a block diagram showing a configuration of the transmitting apparatus according to Embodiment 1 of the present invention;
FIG.3 illustrates a table showing the phase relationships between common pilot signal and dedicated pilot signals;
FIG.4 is a block diagram showing the internal configuration of the pilot arranging section shown in FIG.2;
FIG.5 illustrates a control information conversion table;
FIG.6 illustrates combinations of transmitting antennas and subcarriers;
FIG.7 is a block diagram showing a configuration of the receiving apparatus according to Embodiment 1 of the present invention;
FIG.8 is a block diagram showing the internal configuration of the pilot analyzing section shown in FIG.7;
FIG.9 illustrates the correspondence relationships between transmitting antennas and phase differences between common pilot signal and dedicated pilot signals;
FIG.10 illustrates a sequence diagram showing the steps of communications between the transmitting apparatus shown in FIG. 2 and the receiving apparatus shown in FIG.7;
FIG.11A illustrates a state of allocating transmission pilot signals to subcarriers;
FIG.11B illustrates a state of allocating transmission pilot signals to subcarriers;
FIG.11C illustrates a state of allocating transmission pilot signals to subcarriers;
FIG.11D illustrates a state of allocating transmission pilot signals to subcarriers;
FIG.12 illustrates a situation of the multiplexed received signal;
FIG.13 explains the method for specifying transmitting antenna;
FIG.14A illustrates a state of providing a 0 degree phase difference between neighboring pilot symbols in the frequency domain;
FIG.14B illustrates a state of providing a 90 degree phase difference between neighboring pilot symbols in the frequency domain;
FIG. 14C illustrates a state of providing a 180 degree phase difference between neighboring pilot symbols in the frequency domain;
FIG. 14D illustrates a state of providing a -90 degree phase difference between neighboring pilot symbols in the frequency domain;
FIG.15 is a block diagram showing a configuration of the transmitting apparatus according to Embodiment 2 of the present invention;
FIG.16 is a block diagram showing the internal configuration of the pilot modulating section shown in FIG.15;
FIG.17 illustrates a bit information conversion table;
FIG.18 is a block diagram showing a configuration of the receiving apparatus according to Embodiment 2 of the present invention;
FIG.19 is a block diagram showing the internal configuration of the pilot demodulating section shown in FIG.18;
FIG.20 is a block diagram showing a configuration of the transmitting apparatus according to Embodiment 3 of the present invention;
FIG.21 is a block diagram showing the internal configuration of the pilot modulating section shown in FIG.20;
FIG.22 illustrates a bit information conversion table;
FIG.23 is a block diagram showing a configuration of the receiving apparatus according to Embodiment 3 of the present invention; and

FIG.24 is a block diagram showing the internal configuration of the pilot demodulating section shown in FiG.23.

Best Mode for Carrying Out the Invention

Now, embodiments of the present invention will be described in detail with reference to the accompanying drawings. Embodiments of the present invention will be described presuming a 4 x 4 MIMO-OFDM system with four transmitting antennas and four receiving antennas. Further, in embodiments, the same components having the same functions will be assigned the same reference numerals and overlapping descriptions will be omitted.

(Embodiment 1)

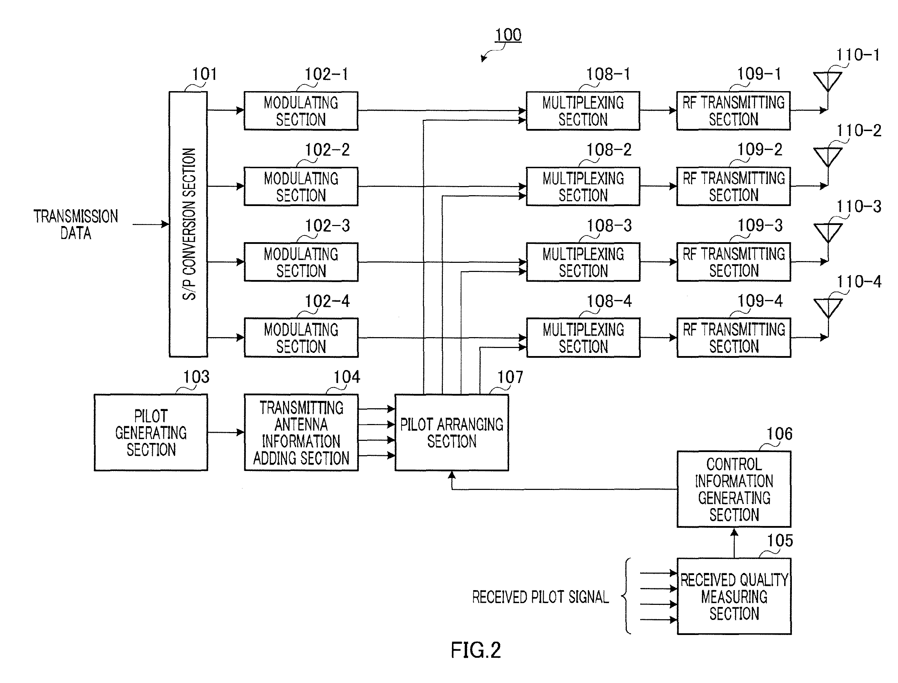

FIG.2 is a block diagram showing the configuration of transmitting apparatus 100 according to Embodiment 1 of the present invention. In this figure, S/P conversion section 101 converts transmission data as input from a serial signal into parallel signals of four sequences, and outputs the transmission data of the sequences to modulating sections 102-1 to 102-4.

Modulating sections 102-1 to 102-4 perform modulating processing of the transmission data outputted from S/P conversion section 101 and output the modulated signals to multiplexing sections 108-1 to 108-4, respectively.

Pilot generating section 103 generates pilot signals and outputs the generated pilot signals to transmitting antenna information adding section 104.

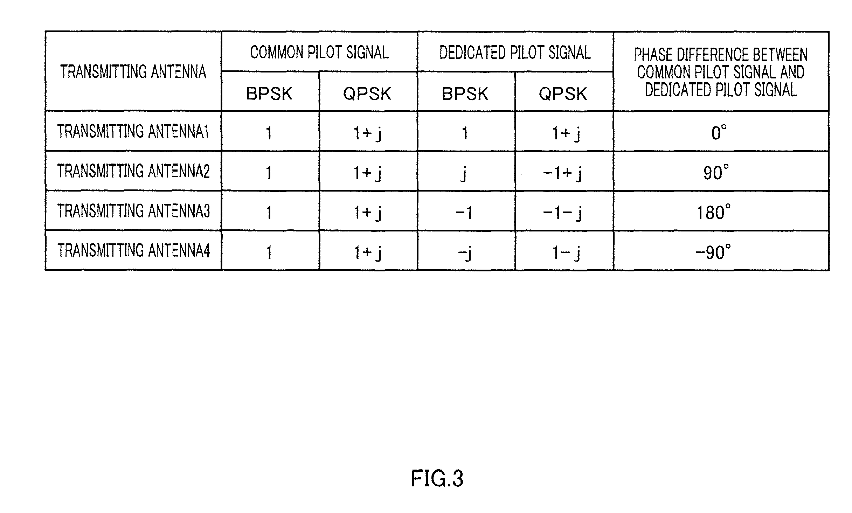

Transmitting antenna information adding section 104 sets the reference phase with the common pilot signal 1 in the pilot signals outputted from pilot generating section 103, and, with respect to this reference phase, applies a phase rotation, which varies between antennas, to the dedicated pilot signals, as transmitting antenna information. Then, the pilot signals assigned transmitting antenna information, are outputted to pilot arranging section 107. When the number of antennas is four, the amount of phase rotation, which varies between antennas, can be varied in 90 degree units, as shown in FIG.3, for example. Transmitting antennas 1 to 4 shown in FIG.3 correspond to transmitting antennas 110-1 to 110-4 shown in FIG.2, respectively.

FIG.3 shows that the dedicated pilot signal transmitted from transmitting antenna 1 has the same phase as the common pilot signal, that is, a 0 degree phase rotation is applied, and the dedicated pilot signal transmitted from transmitting antenna 2 is subjected to a 90 degree phase rotation with respect to the common pilot signal. Moreover, FIG.3 shows that the dedicated pilot signal transmitted from transmitting antenna 3 is subjected to a 180 degree phase rotation with respect to the common pilot signal, and the dedicated pilot signal transmitted from transmitting antenna 4 is subjected to a -90 degree (270 degree) phase rotation with respect to the common pilot signal. When a transmission pilot signal outputted from pilot generating section 103 is BPSK modulated, the common pilot signal is 1, and, when a transmission pilot signal is QPSK modulated, the common pilot signal is 1 + j.

Based on the pilot signals transmitted from receiving apparatus 200, which is a communicating party explained later, received quality measuring section 105 measures received quality such as the SNR (Signal to Noise Ratio), SIR (Signal to Interference Ratio) and SINR (Signal-to-Interference and Noise power Ratio), and outputs measured received quality information to control information generating section 106.

Based on the received quality information outputted from received quality measuring section 105, control information generating section 106 generates control information such as the number of space-multiplexing, switching information between SDM and diversity, transmitting antenna selection information, user identification information in multi-user environment, and outputs the generated control information to pilot arranging section 107.

Based on the control information outputted from control information generating section 106, pilot arranging section 107 allocates the transmission pilot signals outputted from transmitting antenna information adding section 104 to subcarriers, and outputs the transmission pilot signals allocated to subcarriers, to multiplexing sections 108-1 to 108-4. Pilot arranging section 107 will be explained in detail later.

Multiplexing sections 108-1 to 108-4 multiplex the modulated data outputted from corresponding modulating sections 102-1 to 102-4 and the transmission pilot signals outputted from pilot arranging section 107, generate frames (multiplex signals), and outputs the generated multiplex signals to corresponding RF transmitting sections 109-1 to 109-4, respectively. RF transmitting sections 109-1 to 109-4 perform transmission processing such as amplification and up-conversion of the multiplex signals outputted from multiplexing sections 108-1 to 108-4, and transmit the multiplex signals after transmission processing to receiving apparatus 200 explained later via corresponding antennas 110-1 to 110-4.

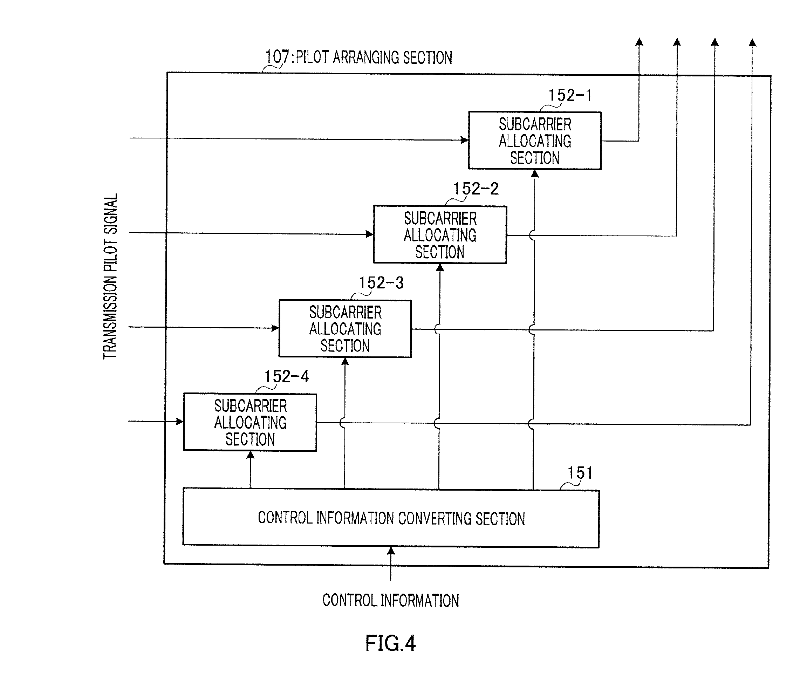

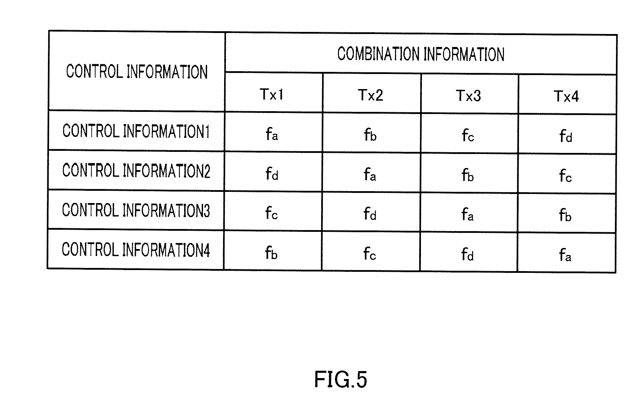

Pilot arranging section 107 will be explained in detail here. FIG.4 is a block diagram showing the internal configuration of pilot arranging section 107 shown in FIG.2. Control information converting section 151 in FIG. 4, as shown in FIG. 5, for example, has in advance a conversion table showing the correspondence relationships between control information, and transmitting antennas and position information of the subcarriers where the transmission pilot signals are allocated.

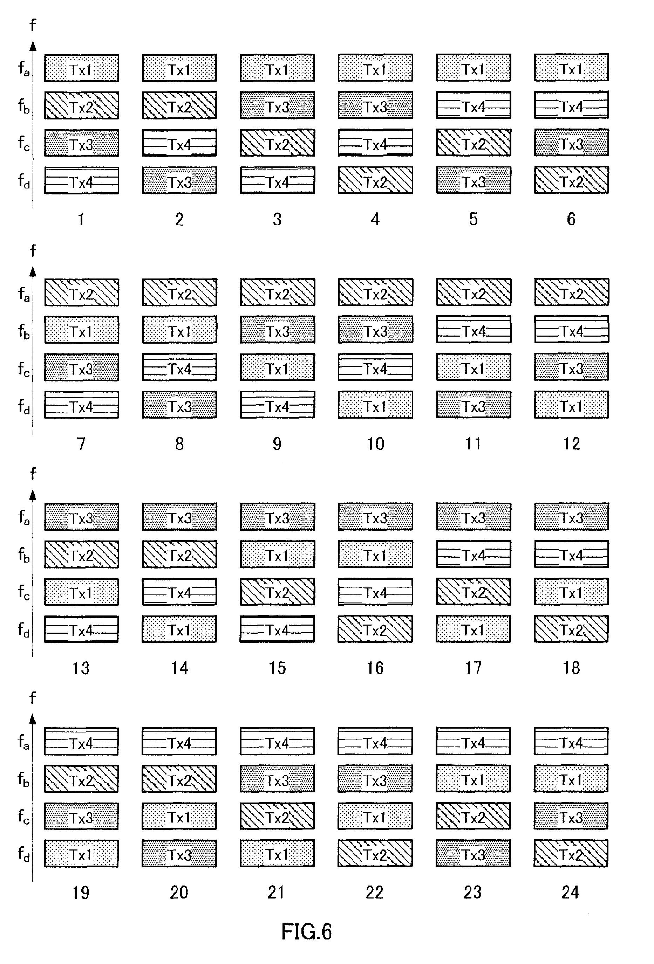

Incidentally, in FIG.5, Tx1 to Tx4 show transmitting antennas 110-1 to 110-4, and $f_a$ to $f_d$ show subcarriers where pilot symbols per transmitting antenna are arranged, respectively. Moreover, there are control information 1 to 4 as control information, items of combination information of transmitting antenna information and subcarrier position information (hereinafter simply "combination information") and respective items of control information correspond to one-to-one. In this connection, although FIG.5 shows only four combination patterns of transmitting antennas and subcarriers, if there are four transmitting antennas and the number of subcarriers where transmission pilot signals are allocated is four, there are twenty four patterns as shown in FIG.6.

Based on this conversion table, control information converting section 151 converts control information outputted from control information generating section 106 into combination information, and outputs the subcarrier position information in the combination information to subcarrier allocating sections 152-1 to 152-4.

Subcarrier allocating sections 152-1 to 152-4 allocate the transmission pilot signals outputted from transmitting antenna information adding section 104 to the subcarriers according to subcarrier position information outputted from control information converting section 151. By this means, transmission pilot signals are allocated to different subcarriers for every transmitting antenna. The transmission pilot signals allocated to the subcarriers are outputted to multiplexing sections 108-1 to 108-4.

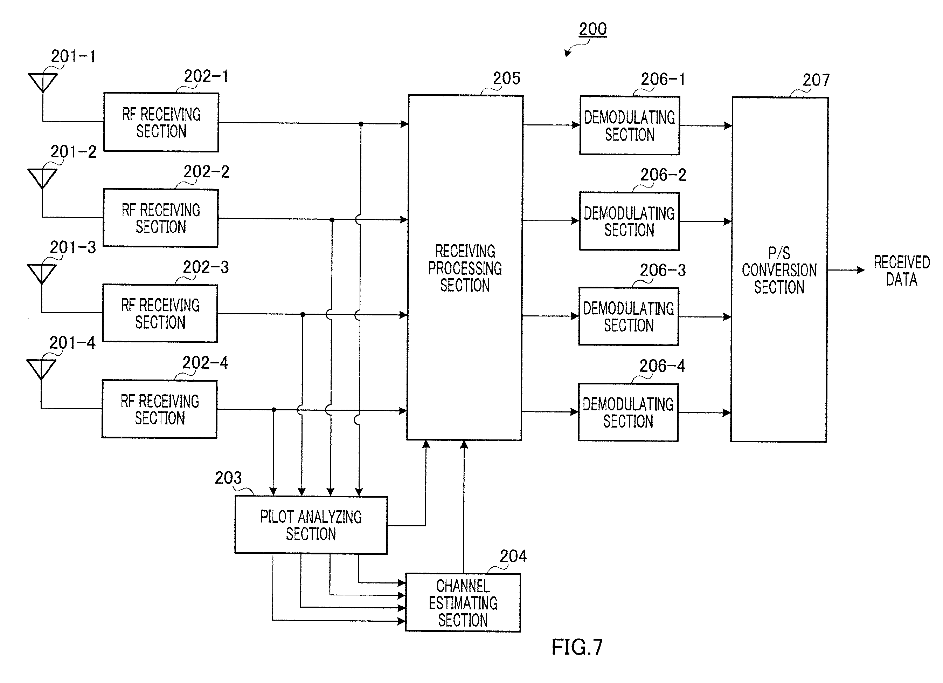

FIG.7 is a block diagram showing the configuration of receiving apparatus 200 according to Embodiment 1 of the present invention. In this figure, RF receiving sections 202-1 to 202-4 respectively receive signals transmitted from transmitting apparatus 100 shown in FIG.2 via antennas 201-1 to 201-4, perform predetermined radio receiving processing including down-conversion of the received signals, and extract the received pilot signals from the received signals. RF receiving sections 202-1 to 202-4 output the data signals in the received signals subjected to radio receiving processing and the extracted received pilot signals to pilot analyzing section 203.

Based on the phase differences between the common pilot signal and the dedicated pilot signals of the received pilot signals outputted from RF receiving sections 202-1 to 202-4, pilot analyzing section 203 specifies the antennas used to transmit the dedicated pilot signals and acquires the control information based on the combination of the transmitting antennas and the subcarriers used to transmit the dedicated pilots. The acquired control information is outputted to receiving processing section 205. Moreover, the received pilot signals are outputted to channel estimating section 204. Pilot analyzing section 203 will be described in detail later.

Channel estimating section 204 performs a channel estimation based on the received pilot signals outputted from pilot analyzing section 203 and outputs channel estimation information to receiving processing section 205.

Based on the control information outputted from pilot analyzing section 203, receiving processing section 205 performs receiving processing of the data signals outputted from RF receiving sections 202-1 to 202-4 and outputs the signals after receiving processing to demodulating sections 206-1 to 206-4. Receiving processing here, for example, refers to MIMO signal separating processing using channel estimation information or diversity receiving processing.

Demodulating sections 206-1 to 206-4 demodulate the signals outputted from receiving processing section 205, and output the demodulated signals to P/S conversion section 207. By converting the parallel signals of four sequences outputted from demodulating sections 206-1 to 206-4 into a serial signal of one sequence, P/S conversion section 207 acquires the received data.

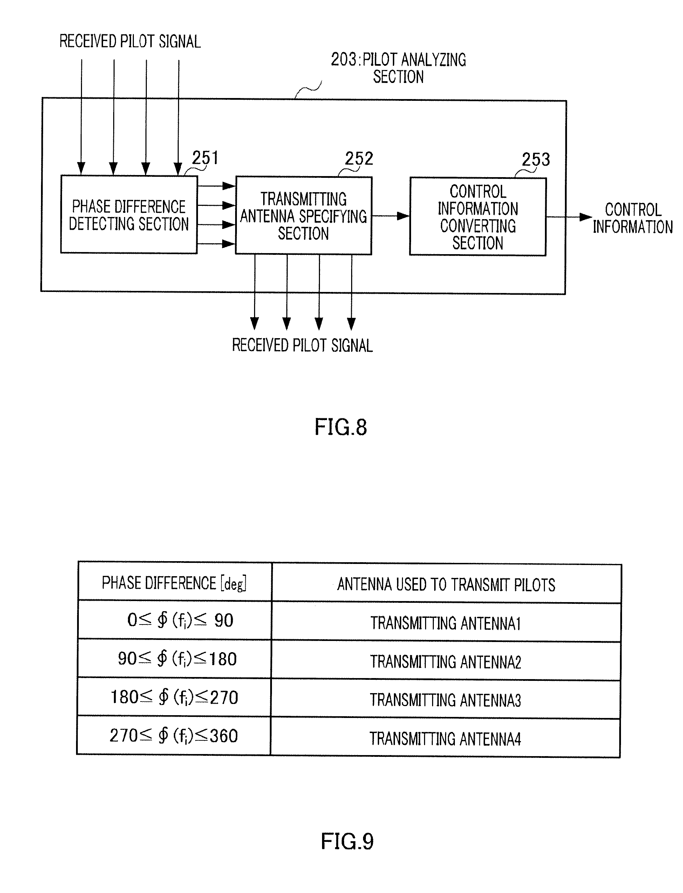

Here, pilot analyzing section 203 shown in FIG.7 will be explained in detail below. FIG.8 is a block diagram showing the internal configuration of pilot analyzing section 203 shown in FIG.7. In FIG.8, phase difference detecting section 251 detects the phase difference between the common pilot signal and the dedicated pilot signal for each subcarrier where the received pilot symbols outputted from RF receiving sections 202-1 to 202-4 are allocated, and outputs phase difference information to transmitting antenna specifying section 252. Phase difference information $\varphi(f_i)$ ($f_i = f_a \sim f_d$) is represented by the following equation 1.

[1]

$$\phi(f_i) = \left| \arg\{ P_{common}(f_i) \} - \arg\{ P_{dedicate}(f_i) \} \right| \quad \dots \text{(Equation 1)}$$

Incidentally, $f_a \sim f_d$ are subcarriers where pilot symbols are allocated, $P_{common}(f_i)$ is a common pilot signal for all subcarriers, and $P_{dedicate}(f_i)$ is a dedicated pilot signal.

Based on the phase difference information outputted from phase difference detecting section 251, transmitting antenna specifying section 252 specifies from which transmitting antennas the received pilot signals have been transmitted. If transmitting apparatus 100 gives the phase differences shown in FIG.3 to the common pilot signal and the dedicated pilot signals, transmitting antenna specifying section 252 specifies the transmitting antennas based on the correspondence relationships shown in FIG.9.

Then, transmitting antenna specifying section 252 generates combination information of the subcarriers and the transmitting antennas used to transmit the dedicated pilot signals, outputs the generated combination information to control information converting section 253 and the received pilot signals to channel estimating section 204.

Control information converting section 253 has in advance the conversion table shown in FIG.5, and, based on this conversion table, converts the combination information outputted from transmitting antenna specifying section 252, to control information. The control information is outputted to receiving processing section 205.

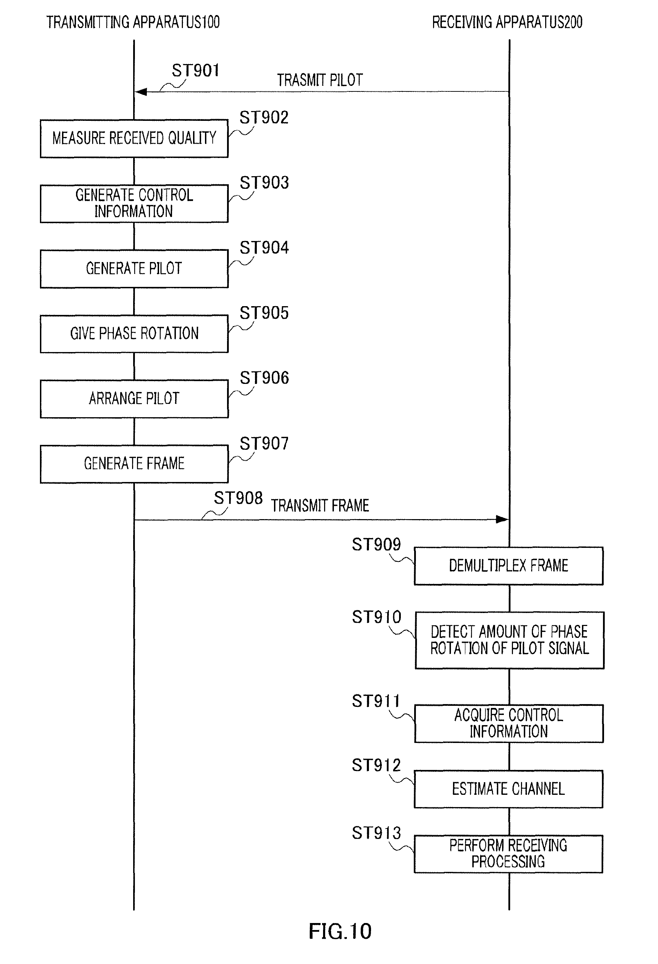

Next, the operations of transmitting apparatus 100 and receiving apparatus 200 having the above-described configurations will be explained. FIG.10 illustrates a sequence diagram showing the steps of communications between transmitting apparatus 100 shown in FIG.2 and receiving apparatus 200 shown in FIG.7. In FIG.10, in step (hereinafter abbreviated as "ST") 901, receiving apparatus 200 transmits a pilot signal to transmitting apparatus 100.

In ST902, received quality measuring section 105 of transmitting apparatus 100 measures received quality such as the SNR, SIR and SINR using the pilot signal transmitted from receiving apparatus 200, and, in ST903, based on the received quality measured in ST902, control information generating section 106 generates control information.

In ST904, pilot generating section 103 of transmitting apparatus 100 generates a transmission pilot signal, and, in ST905, transmitting antenna information adding section 104 gives the dedicated pilot signal a phase rotation such that the phase difference between the dedicated pilot signal of the transmission pilot signal generated in ST904 and the common pilot signal varies per transmitting antenna.

In ST906, pilot arranging section 107 of transmitting apparatus 100 converts the control information generated in ST903 into combination information and allocates the transmission pilot signals to the subcarriers according to the subcarrier position information of the combination information.

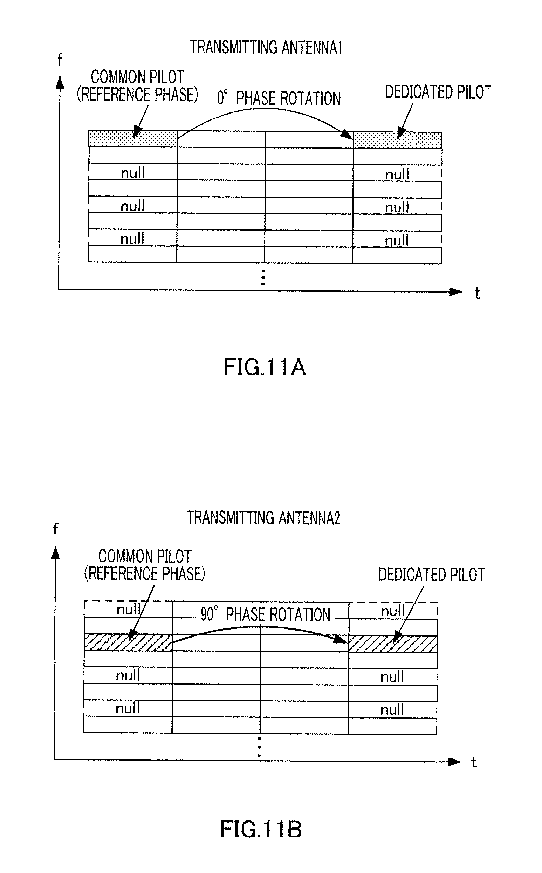

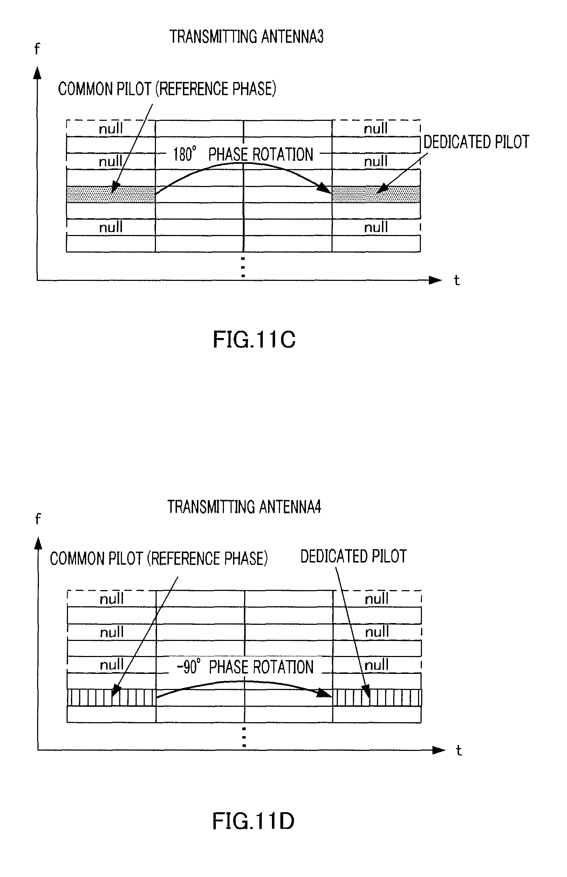

Here, FIGs.11A to 11D show the states of allocating the transmission pilot signal to the subcarriers. Here, all transmitting antennas allocate the common pilot symbol in the first symbol and the dedicated pilot symbol in the fourth symbol. Moreover, in a MIMO system, to prevent pilot signals transmitted from antennas from interfering with each other, the subcarrier where one antenna allocates the common pilot or dedicated pilot is a null subcarrier for the other antennas, as shown in FIGs. 11A to 11D. Incidentally, as explained earlier, it depends on control information that, to which subcarriers pilot signals assigned which transmitting antenna information are arranged. Moreover, as shown in FIGs. 11A to 11D, each dedicated pilot signal is given a phase rotation that varies between transmitting antennas with respect to the reference phase of the common pilot signal. In FIGs.11A to 11D, the blank symbols represent data symbols.

Referring to FIG. 10 again, in ST907, multiplexing sections 108-1 to 108-4 multiplex the transmission data and the pilot signals allocated to the subcarriers in ST906 and generate frames, and, in ST908, transmit the generated frames to receiving apparatus 200.

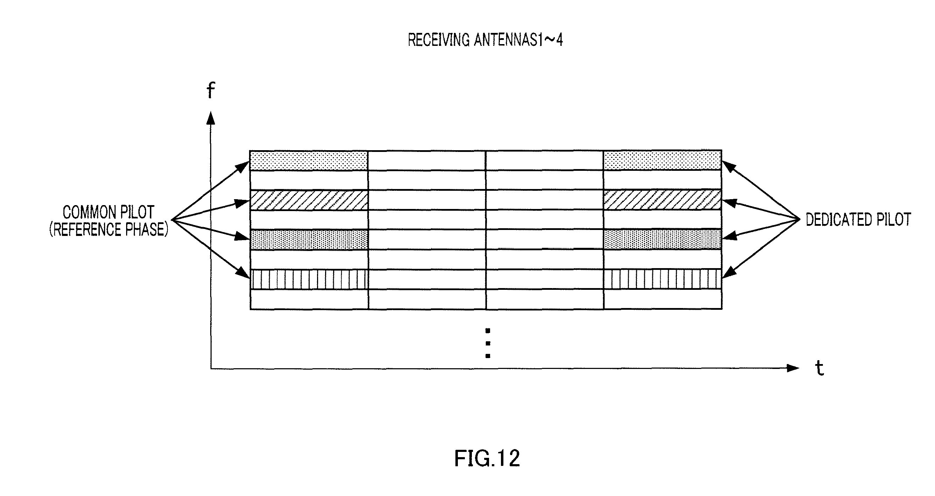

In ST909, RF receiving sections 202-1 to 202-4 of receiving apparatus 200 receive the frames transmitted from transmitting apparatus 100 and demultiplex the received frames to the pilot signals and the data signals. As shown in FIG.12, in the signals which RF receiving sections 202-1 to 202-4 receive, even though the data symbols (the blank symbols in the drawings) are space-multiplexed, the common pilot signals and the dedicated pilot signals are not space-multiplexed. The reason is that the subcarrier where one antenna in transmitting apparatus 100 allocates the common pilot or the dedicated pilot is a null subcarrier for the other antennas. Consequently, the subcarriers where the pilot symbols are allocated are associated with the transmitting antennas in one-to-one.

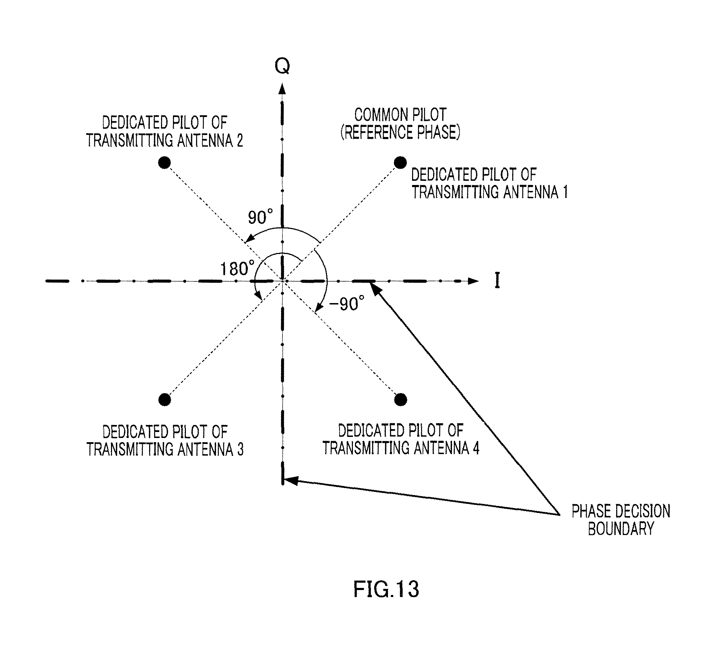

In ST910, pilot analyzing section 203 detects the amounts of phase rotation with the pilot signals demultiplexed in ST909 and specifies from which transmitting antenna each pilot signal has been transmitted. With the present embodiment, as explained earlier, the correspondence relationships between subcarriers and transmitting antennas are not fixed, and control information is transmitted by changing these correspondence relationships. For this reason, receiving apparatus 200 needs to specify from which transmitting antennas the received pilot signals have been transmitted. Here, this specifying method will be explained using FIG.13.

Transmitting apparatus 100 gives the dedicated pilot signal a phase rotation, which varies between antennas with respect to the reference phase of the common pilot signal. For this reason, by detecting the phase difference between the dedicated pilot and the reference phase of the common pilot, receiving apparatus 200 can specify from which transmitting antennas the received pilots have been transmitted.

Referring to FIG.13, if the common pilot symbol is received in the first quadrant and a dedicated pilot symbol is received in the first quadrant, the dedicated pilot symbol is specified as the pilot signal transmitted from transmitting antenna 1. Moreover, if a dedicated pilot symbol is received in the second quadrant, the dedicated pilot symbol is specified as the pilot signal transmitted from transmitting antenna 2. Moreover, if a dedicated pilot symbol is received in the third quadrant, the dedicated pilot symbol is specified as the pilot signal transmitted from transmitting antenna 3. In addition, if a received dedicated pilot symbol is received in the fourth quadrant, the dedicated pilot symbol is specified as the pilot signal transmitted from transmitting antenna 4.

Referring to FIG.10 again, in ST911, pilot analyzing section 203 of receiving apparatus 200 generates combination information of the subcarrier and the transmitting antenna used to transmit the pilot signal, and acquires control information based on the generated combination information.

In ST912, channel estimating section 204 of receiving apparatus 200 performs a channel estimation using the received pilot signals, and, in ST913, based on the control information acquired in ST911, receiving processing section 205 performs MIMO signal demultiplexing processing using the channel estimation information estimated in ST912 or diversity receiving processing. Then, demodulating sections 206-1 to 206-4 perform demodulation on the signals after receiving processing, P/S conversion section 207 performs P/S conversion on the signals after demodulation, and received data is acquired.

In this way, according to Embodiment 1, the transmitting apparatus and the receiving apparatus have in advance tables that associate control information with combination information of transmitting antennas and subcarriers used to transmit pilot signals, the transmitting apparatus gives the dedicated pilot signals phase rotations such that the phase difference between the common pilot signal and the dedicated pilot signal varies between transmitting antennas, and the receiving apparatus specifies the antennas used to transmit the pilot signals from the phase differences between the received common pilot signal and the received dedicated pilot signals and acquires control information based on combination information of subcarriers and transmitting antennas used to transmit the pilot signals, so that, control information can be transmitted using the pilot signals, thereby allocating more data by reducing the amount of control information allocated in frames, and, consequently, improving data rate while maintaining the accuracy of channel estimation. In addition, it is also possible to allocate more pilot signals by reducing the amount of control information allocated in frames, and consequently improve the accuracy of channel estimation while maintaining data rate.

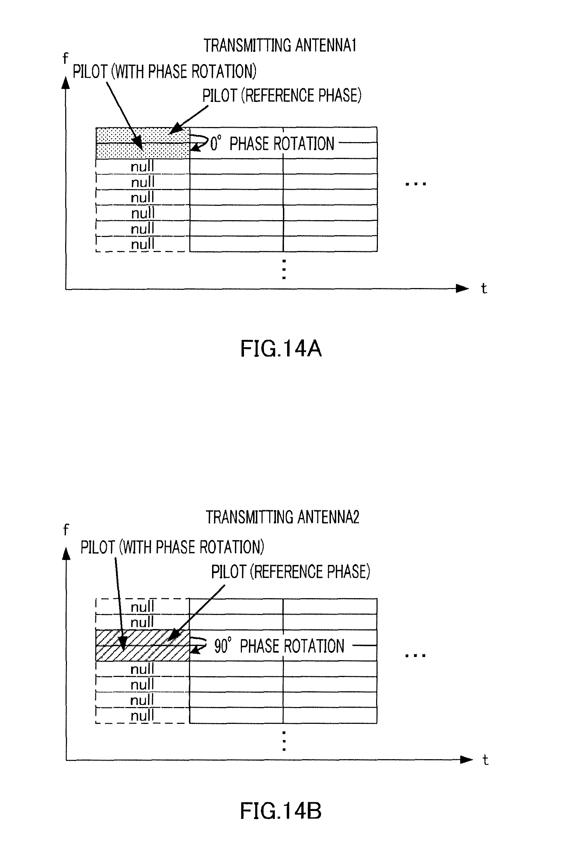

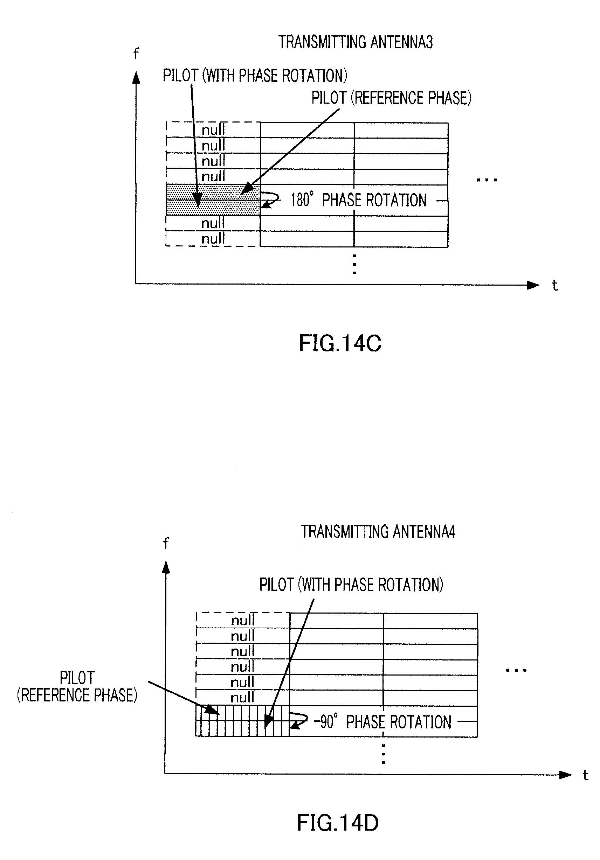

Incidentally, although the present embodiment has been described above to assign transmitting antenna information by providing phase differences between the common pilot signal and the dedicated pilot signals arranged in the time domain, the present invention is not limited to this, and, as shown in FIGs. 14A to 14D, transmitting antenna information may be added by way of providing phase differences varying between transmitting antennas between neighboring pilot symbols in the frequency domain. Incidentally, in FIGs.14A to 14D, the blank symbols show data symbols.

(Embodiment 2)

A case has been described above with Embodiment 1 where control information is transmitted using pilot signals by associating control information with combination information of the transmitting antennas and subcarriers used to transmit the pilot signals. Now, a case will be described with Embodiment 2 of the present invention where data is transmitted using pilot signals by associating data with combination information between the transmitting antennas and subcarriers used to transmit the pilot signals.

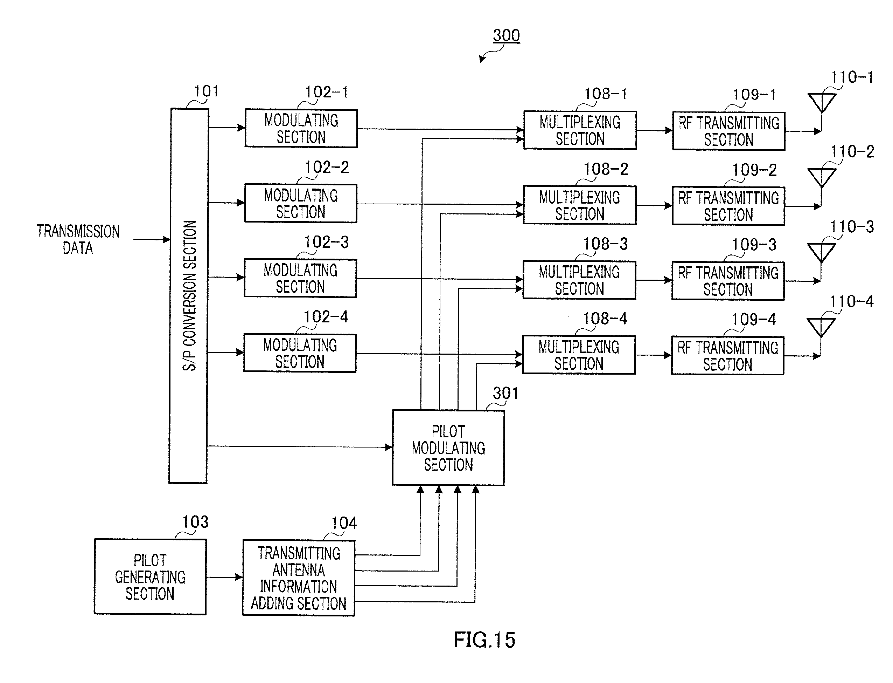

FIG.15 is a block diagram showing the configuration of transmitting apparatus 300 according to Embodiment 2 of the present invention. FIG.15 is different from FIG.2 in that received quality measuring section 105 and control information generating section 106 are removed and pilot arranging section 107 is changed to pilot modulating section 301.

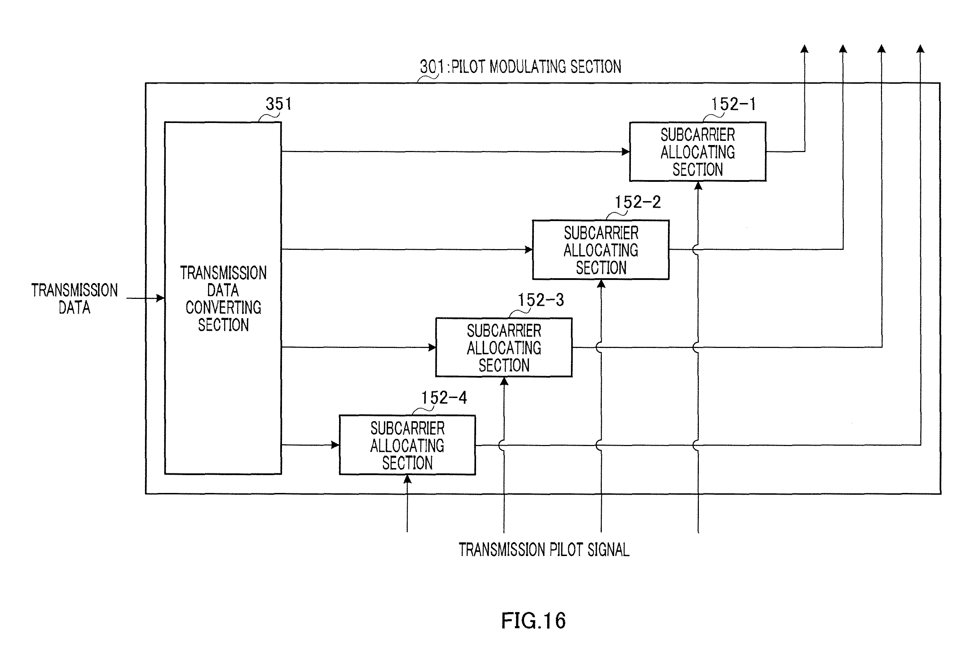

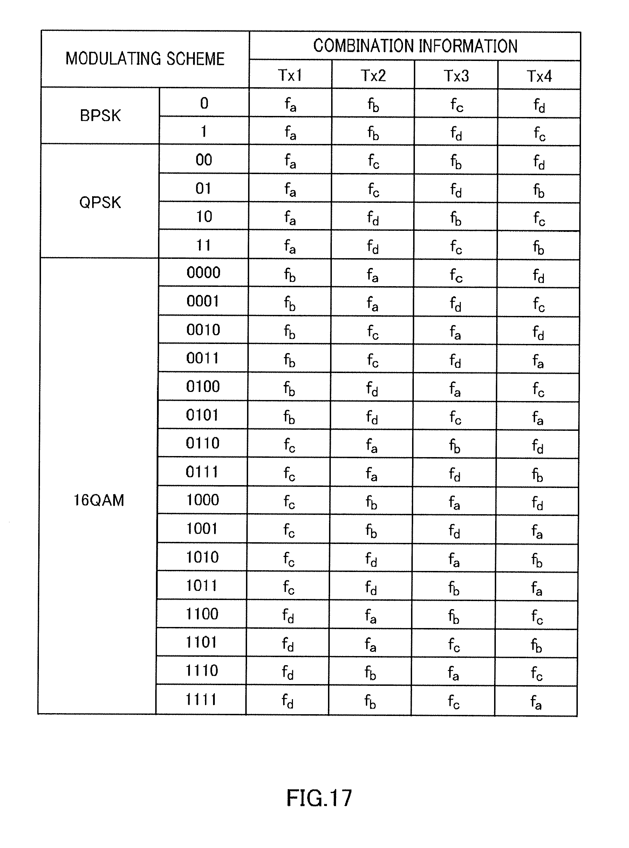

FIG.16 is a block diagram showing the internal configuration of pilot modulating section 301 shown in FIG.15. Referring to FIG.16, transmitting data converting section 351 has in advance a conversion table, as shown in FIG.17, for example, showing the correspondence relationships between data and the position information of subcarriers where the transmission pilot signals are allocated.

Incidentally, in FIG.17, Tx1 to Tx4 are transmitting antennas 110-1 to 110-4 and $f_a$ to $f_a$ are subcarriers where pilot symbols per transmitting antenna are arranged, respectively. Moreover, there are two values of BPSK, four values of QPSK, sixteen values of 16QAM as data, and items of combination information of transmitting antenna information and subcarrier position information and bit values per symbol in modulation schemes correspond to one-to-one. Incidentally, if there are four transmitting antennas and four subcarriers where transmission pilot signals are allocated, there are twenty four patterns as shown in FIG.6, so that the two values of BPSK, four values of QPSK, and sixteen values of 16QAM, total twenty two values, can be associated with combination information of transmitting antennas and subcarriers.

Based on this conversion table, transmission data converting section 351 converts transmission data into combination information and outputs the subcarrier position information of the combination information to subcarrier allocating sections 152-1 to 152-4.

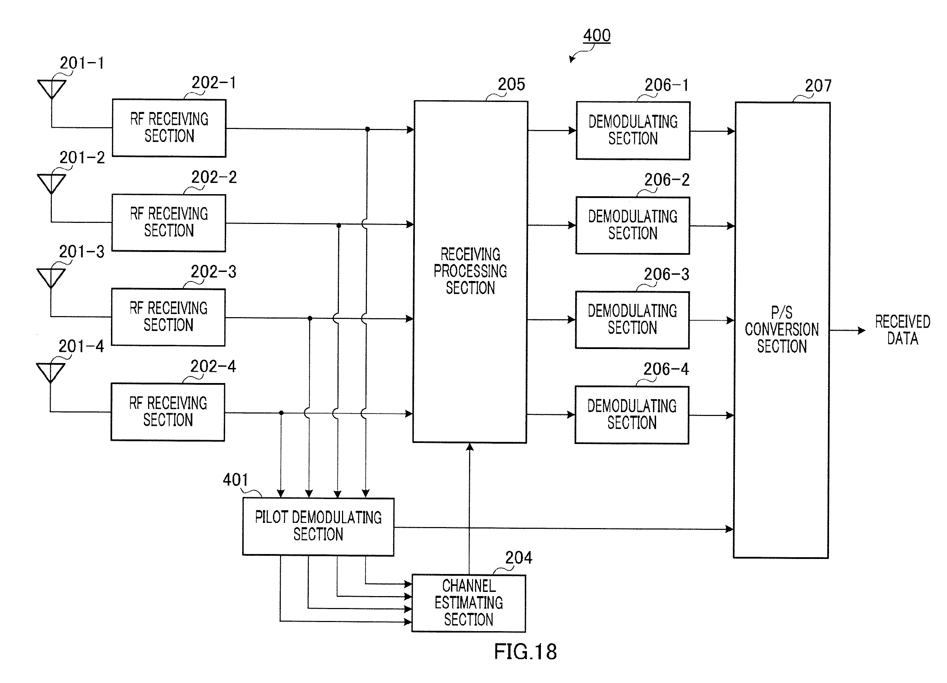

FIG.18 is a block diagram showing the configuration of receiving apparatus 400 according to Embodiment 2 of the present invention. FIG.18 is different from FIG.7 in that pilot analyzing section 203 is changed to pilot demodulating section 401.

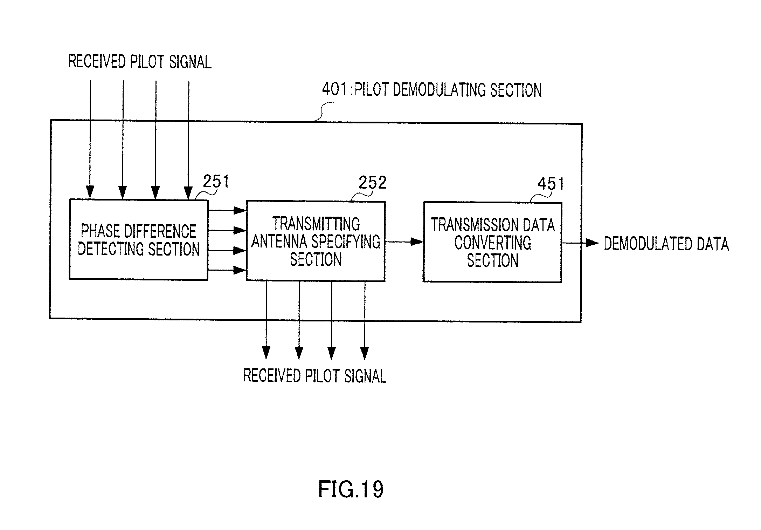

FIG.19 is a block diagram showing the internal configuration of pilot demodulating section 401 shown in FIG.18. Referring to FIG.19, transmission data converting section 451 has in advance the conversion table shown in FIG.17, and, based on this conversion table, converts the combination information outputted from transmission antenna specifying section 252 into demodulated data. The demodulated data is outputted to P/S conversion section 207.

When four-bit data is transmitted using a pilot signal, the accuracy of symbol decision specifying the transmitting antennas is the same as QPSK, so that the accuracy of data detection improves more than 16 QAM modulation, thereby improving received quality.

In this way, according to Embodiment 2, it is possible to transmit data using pilot signals by associating data with combination information of transmitting antennas and subcarriers used to transmit pilot signals, so that it is possible to transmit more data and consequently improve data rate more while maintaining the accuracy of channel estimation.

(Embodiment 3)

A case has been described above with Embodiment 2 where data is transmitted using pilot signals by associating data with combination information of the transmitting antennas and subcarriers used to transmit the pilot signals. Now, a case will be described below with Embodiment 3 where redundancy information is transmitted using pilot signals by associating the redundancy information with combination information of the transmitting antennas and subcarriers used to transmit the pilot signals.

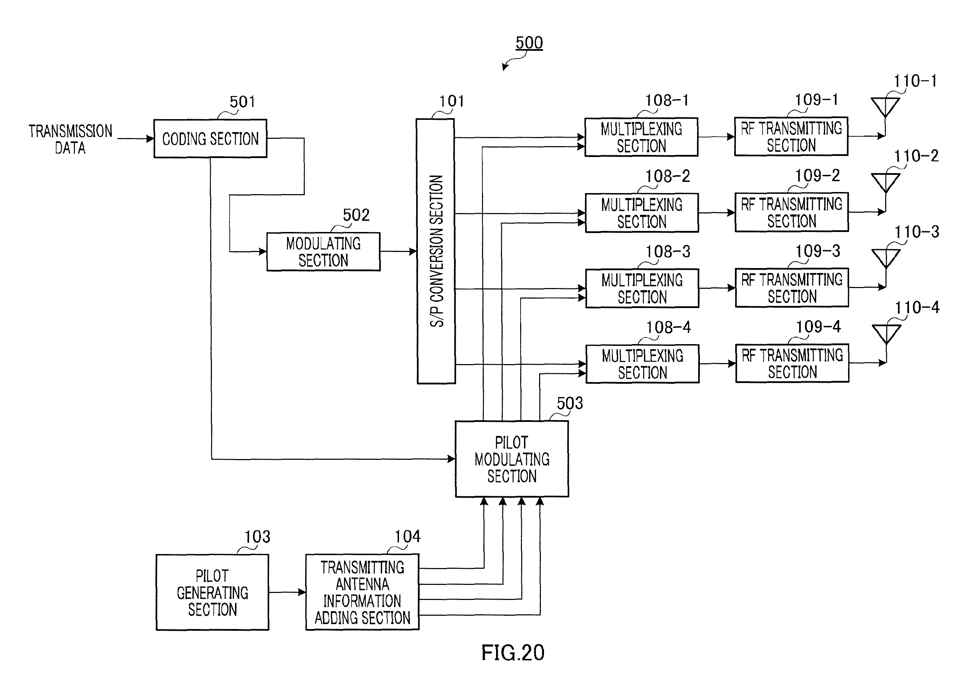

FIG.20 is a block diagram showing the configuration of transmitting apparatus 500 according to Embodiment 3 of the present invention. FIG.20 is different from FIG.15 in that coding section 501 and modulating section 502 are added and pilot modulating section 301 is changed to pilot modulating section 503.

Coding section 501 performs coding processing such as turbo coding of transmission data and generates information bits and redundancy bits. The generated information bits are outputted to modulating section 502 and the redundancy bits are outputted to pilot modulating section 503. Modulating section 502 performs modulating processing of the information bits outputted from coding section 501 and outputs the modulated signal to S/P conversion section 101.

Based on the redundancy bits outputted from coding section 501, pilot modulating section 503 allocates transmission pilot signals outputted from transmitting antenna information adding section 104 to the subcarriers, and outputs the transmission pilot signals allocated to the subcarriers to multiplexing sections 108-1 to 108-4.

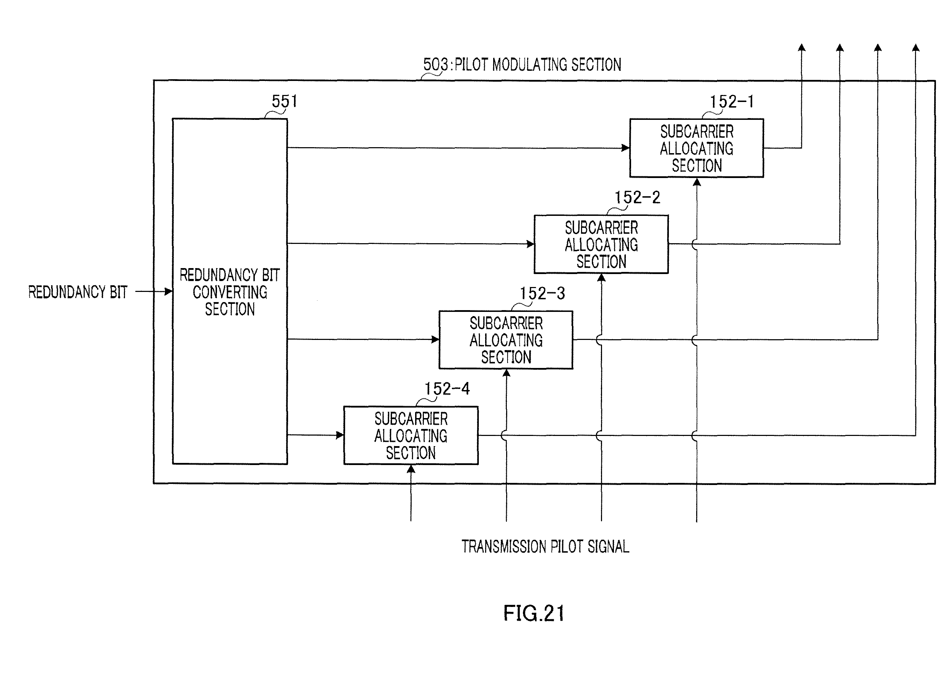

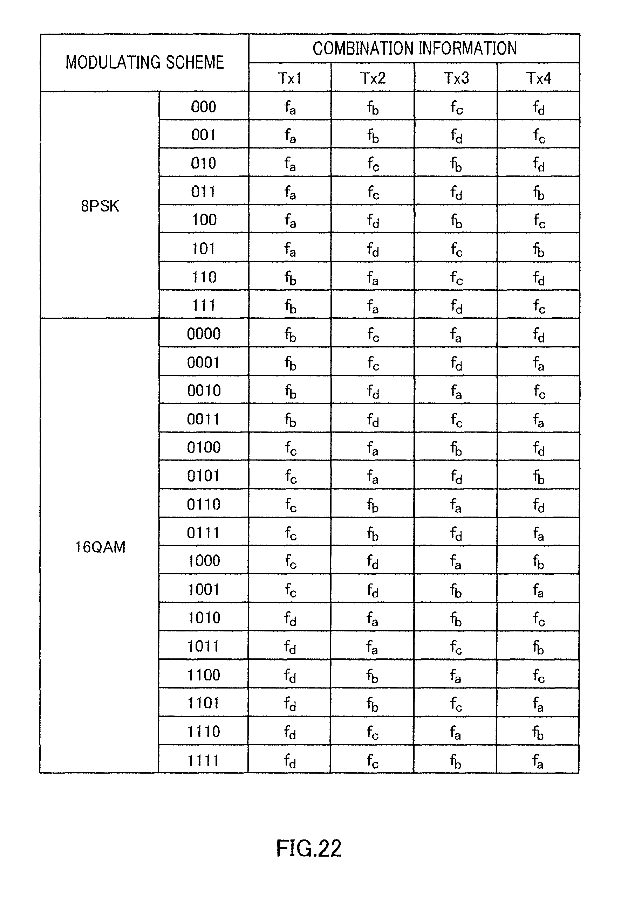

FIG.21 is a block diagram showing the internal configuration of pilot modulating section 503 shown in FIG.20. Referring to FIG.21, redundancy bit converting section 551 has in advance the conversion table shown in FIG.17, for example. Incidentally, redundancy bit converting section 551 may also have the conversion table shown in FIG.22 and in that case would implement even more accurate error correction.

Based on the conversion table shown in FIG.17, redundancy bit converting section 551 converts the redundancy bits into combination information and outputs the subcarrier position information of the combination information to subcarrier allocating sections 152-1 to 152-4.

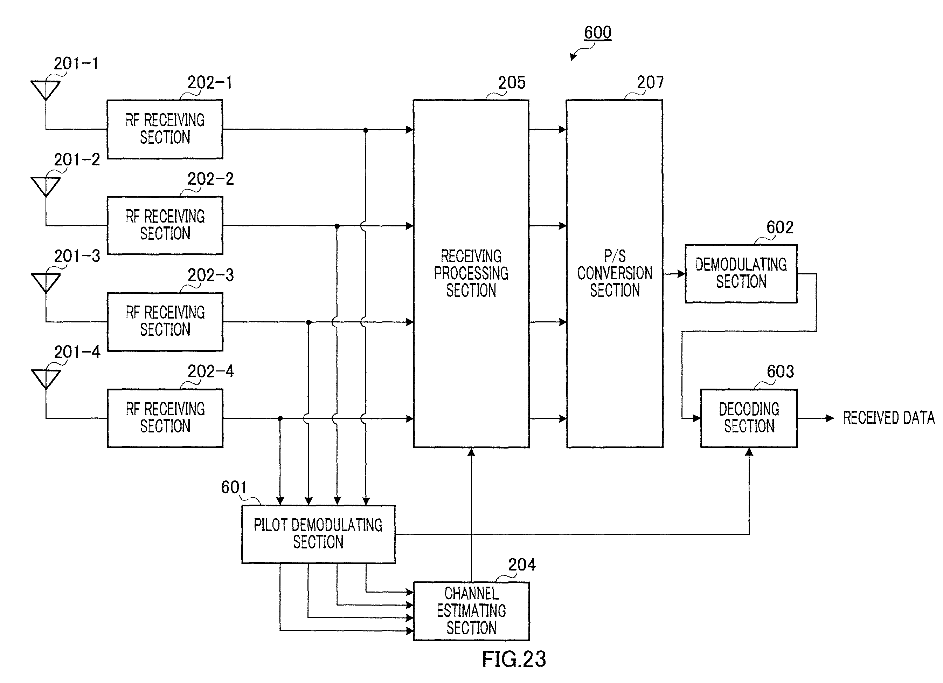

FIG.23 is a block diagram showing the configuration of receiving apparatus 600 according to Embodiment 3 of the present invention. FIG.23 is different from FIG.18 in that pilot demodulating section 401 is changed to pilot demodulating section 601 and demodulating section 602 and decoding section 603 are added.

Based on the phase differences between the common pilot signal and the dedicated pilot signals of the received pilot signals outputted from RF receiving sections 202-1 to 202-4, pilot demodulating section 601 specifies the antennas used to transmit the dedicated pilot signals and acquires the redundancy bits based on the combinations of the transmitting antennas and the subcarriers used to transmit the dedicated pilots. The acquired redundancy bits are outputted to decoding section 603.

Demodulating section 602 performs demodulation processing of the signal outputted from P/S conversion section 207, generates a demodulated signal and outputs the generated demodulated signal to decoding section 603. Decoding section 603 performs decoding processing such as turbo decoding using redundancy bits outputted from pilot demodulating section 601, of the demodulated signal outputted from demodulating section 602, and acquires decoded data, that is, received data.

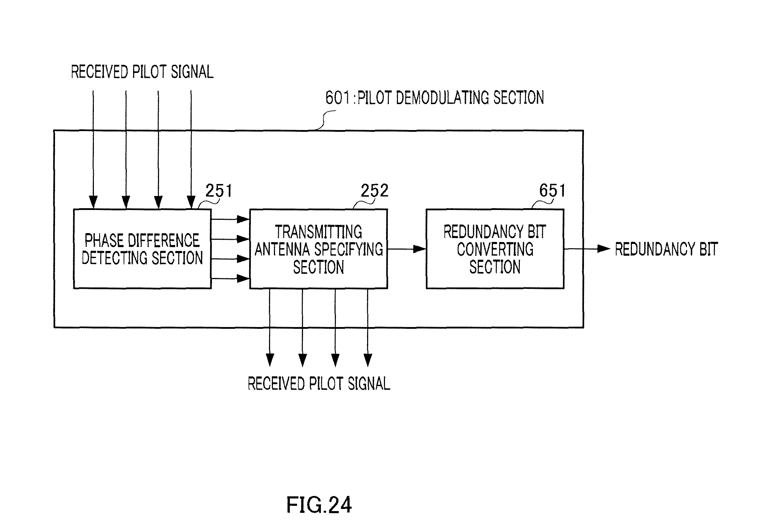

FIG.24 is a block diagram showing the internal configuration of pilot demodulating section 601 shown in FIG.23. Referring to FIG.24, redundancy bit converting section 651 has in advance the conversion table shown in FIG.17 and, based on the conversion table, converts the combination information outputted from transmitting antenna specifying section 252 into redundancy bits. The redundancy bits are outputted to decoding section 603.

In this way, according to Embodiment 3, redundancy bits can be transmitted using pilot signals by associating the redundancy bits with combination information of the transmitting antennas and subcarriers used to transmit the pilot signals, so that it is possible to improve error correction capacity while maintaining the accuracy of channel estimation and consequently improve received quality. Moreover, if received quality is fixed, it is possible to transmit more data and consequently improve data rate.

Moreover, although a case has been described with the present embodiment where coding is performed before MIMO stream is separated at the transmitting apparatus, coding may be performed individually for each MIMO stream.

Moreover, it is also possible to combine the present embodiment and Embodiment 2 and improve system throughput by transmitting transmission data by pilot signals to improve data rate if received states are good and by transmitting redundancy bits by pilot signals to improve received quality if received states are poor.

Embodiments of the present invention have been described.

Moreover, with the embodiments described above, it is possible to apply the transmitting apparatuses to the base station apparatuses and the receiving apparatuses to the mobile station apparatuses, conversely, it is possible to apply the transmitting apparatuses to the mobile station apparatuses and the receiving apparatuses to the base station apparatuses.

Although cases have been described with the embodiments here where the number of transmitting antennas and the number of receiving antennas are both four and the number of subcarriers where transmission pilot signal is allocated is four, the present invention is not limited to this, and the number of transmitting antennas, the number of receiving antennas and the number of subcarriers may be two or more.

Moreover,althoughcaseshavebeen described with the embodiments above where the present invention is configured by hardware, the present invention may be implemented by software.

Each function block employed in the description of the aforementioned embodiment may typically be implemented as an LSI constituted by an integrated circuit. These may be individual chips or partially or totally contained on a single chip. "LSI" is adopted here but this may also be referred to as "IC, " "system LSI, " "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-314621, filed on October 28, 2005, the entire content of which is expressly incorporated by reference herein. Industrial Applicability

The transmitting apparatus, the receiving apparatus, the transmission method, the reception method and the wireless communication system have an advantage of improving both data rate and the accuracy of channel estimation in MIMO-OFDM system and are applicable to, for example, mobile phones, base stations, and wireless cellular systems.

## Claims

1. A transmitting apparatus comprising:

   a plurality of transmitting antennas;
   an antenna information adding section that assigns antenna information to pilot signals transmitted from the plurality of transmitting antennas respectively, the antenna information being attached to the pilot signals to identify the corresponding transmitting antennas;
   a subcarrier allocating section that allocates the pilot signals assigned the antenna information to subcarriers and combines the antenna information and the subcarriers to which the pilot signals are allocated; and
   a transmitting section that transmits another piece of information by a combination of the antenna information and the subcarriers to which the pilot signals are allocated.

2. The transmitting apparatus according to claim 1, wherein the antenna information adding section applies phase rotations to the pilot signals such that phase differences between nearest pilot signals allocated in a time domain or frequency domain vary between the transmitting antennas.

3. The transmitting apparatus according to claim 2, wherein, when the nearest pilot signals arranged in the time domain or frequency domain comprise common pilot signals and dedicated pilot signals, the antenna information adding section applies the phase rotations to the dedicated pilot signals such that the phase differences between the common pilot signals and the dedicated pilot signals vary between the transmitting antennas.

4. The transmitting apparatus according to claim 1, wherein the transmitting section transmits control information by the combination of the antenna information and the subcarriers to which the pilot signals are allocated.

5. The transmitting apparatus according to claim 1, wherein the transmitting section transmits data by the combination of the antenna information and the subcarriers to which the pilot signals are allocated.

6. The transmitting apparatus according to claim 1, wherein the transmitting section transmits redundancy information by the combination of the antenna information and the subcarriers to which the pilot signals are allocated.

7. A receiving apparatus comprising:

   a receiving section that receives pilot signals assigned antenna information, allocated to subcarriers, and transmitted from a plurality of transmitting antennas respectively, the antenna information being attached to the pilot signals to identify the corresponding transmitting antennas;

an antenna specifying section that specifies transmitting antennas from which the pilot signals are transmitted from the antenna information; and

a converting section that converts combination information of the specified transmitting antennas and the subcarriers to which the pilot signals are allocated, into another piece of information and acquires the another piece of information.

8. The receiving apparatus according to claim 7, comprising a phase difference detecting section that detects phase differences between nearest pilot signals arranged in a time domain or frequency domain,
wherein the specifying section specifies transmitting antennas from which the pilot signals are transmitted, based on the phase differences.

9. The receiving apparatus according to claim 8, wherein, when the nearest pilot signals arranged in the time domain or frequency domain comprise common pilot signals and dedicated pilot signals, the phase difference detecting section detects the phase differences between the common pilot signals and the dedicated pilot signals.

10. A transmitting apparatus comprising:

an antenna information adding step of assigning antenna information to pilot signals transmitted from the plurality of transmitting antennas respectively, the antenna information being attached to the pilot signals to identify the corresponding transmitting antennas;

a subcarrier allocating step of allocating the pilot signals assigned the antenna information to subcarriers and combining the antenna information and the subcarriers to which the pilot signals are allocated; and

a transmitting step of transmitting another piece of information by a combination of the antenna information and the subcarriers to which the pilot signals are allocated.

11. A receiving apparatus comprising:

a receiving step of receiving pilot signals assigned antenna information, allocated to subcarriers, and transmitted from a plurality of transmitting antennas respectively, the antenna information being attached to the pilot signals to identify the corresponding transmitting antennas;

an antenna specifying step of specifying the transmitting antennas from which the pilot signals are transmitted from the antenna information; and

a converting step of converting combination information of the specified transmitting antennas and the subcarriers to which the pilot signals are allocated, into another piece of information and acquiring the another piece of information.

12. A wireless communication system comprising:

a transmitting apparatus that comprises:

a plurality of transmitting antennas;

an antenna information adding section that assigns antenna information to pilot signals transmitted from the plurality of transmitting antennas respectively, the antenna information being attached to the pilot signals to identify the corresponding transmitting antennas;

a sub carrier allocating section that allocates the pilot signals assigned the antenna information to subcarriers and combines the antenna information and the subcarriers to which the pilot signals are allocated; and

a transmitting section that transmits another piece of information by a combination of the antenna information and the subcarriers to which the pilot signals are allocated; and

a receiving apparatus that comprises:

a receiving section that receives the pilot signals transmitted from the transmitting apparatus;

an antenna specifying section that specifies the transmitting antennas from which the pilot signals are transmitted from the antenna information; and

a converting section that converts combination information of the specified transmitting antennas and the subcarriers to which the pilot signals are allocated, into another piece of information and acquires the another piece of information.

FIG.1 ( PRIOR ART )

FIG.2

| TRANSMITTING ANTENNA | COMMON PILOT SIGNAL | | DEDICATED PILOT SIGNAL | | PHASE DIFFERENCE BETWEEN COMMON PILOT SIGNAL AND DEDICATED PILOT SIGNAL |
|---|---|---|---|---|---|
| | BPSK | QPSK | BPSK | QPSK | |
| TRANSMITTING ANTENNA1 | 1 | $1+j$ | 1 | $1+j$ | $0°$ |
| TRANSMITTING ANTENNA2 | 1 | $1+j$ | $j$ | $-1+j$ | $90°$ |
| TRANSMITTING ANTENNA3 | 1 | $1+j$ | $-1$ | $-1-j$ | $180°$ |
| TRANSMITTING ANTENNA4 | 1 | $1+j$ | $-j$ | $1-j$ | $-90°$ |

FIG.3

EP 1 931 070 A1

FIG.4

107:PILOT ARRANGING SECTION

152-1 SUBCARRIER ALLOCATING SECTION

152-2 SUBCARRIER ALLOCATING SECTION

152-3 SUBCARRIER ALLOCATING SECTION

152-4 SUBCARRIER ALLOCATING SECTION

151 CONTROL INFORMATION CONVERTING SECTION

CONTROL INFORMATION

TRANSMISSION PILOT SIGNAL

| CONTROL INFORMATION | COMBINATION INFORMATION | | | |
| --- | --- | --- | --- | --- |
| | Tx1 | Tx2 | Tx3 | Tx4 |
| CONTROL INFORMATION1 | $f_a$ | $f_b$ | $f_c$ | $f_d$ |
| CONTROL INFORMATION2 | $f_d$ | $f_a$ | $f_b$ | $f_c$ |
| CONTROL INFORMATION3 | $f_c$ | $f_d$ | $f_a$ | $f_b$ |
| CONTROL INFORMATION4 | $f_b$ | $f_c$ | $f_d$ | $f_a$ |

FIG.5

FIG.6

FIG.7

EP 1 931 070 A1

RECEIVED PILOT SIGNAL

203:PILOT ANALYZING
SECTION

| 251 | 252 | 253 |
|-----|-----|-----|
| PHASE DIFFERENCE DETECTING SECTION | TRANSMITTING ANTENNA SPECIFYING SECTION | CONTROL INFORMATION CONVERTING SECTION |

CONTROL
INFORMATION

RECEIVED PILOT SIGNAL

FIG.8

| PHASE DIFFERENCE [deg] | ANTENNA USED TO TRANSMIT PILOTS |
|---|---|
| $0 \leq \phi(f_i) \leq 90$ | TRANSMITTING ANTENNA1 |
| $90 \leq \phi(f_i) \leq 180$ | TRANSMITTING ANTENNA2 |
| $180 \leq \phi(f_i) \leq 270$ | TRANSMITTING ANTENNA3 |
| $270 \leq \phi(f_i) \leq 360$ | TRANSMITTING ANTENNA4 |

FIG.9

TRANSMITTING APPARATUS100                                    RECEIVING APPARATUS200

ST901                                TRASMIT PILOT

ST902
| MEASURE RECEIVED QUALITY |

ST903
| GENERATE CONTROL INFORMATION |

ST904
| GENERATE PILOT |

ST905
| GIVE PHASE ROTATION |

ST906
| ARRANGE PILOT |

ST907
| GENERATE FRAME |

ST908  TRANSMIT FRAME

ST909
| DEMULTIPLEX FRAME |

ST910
| DETECT AMOUNT OF PHASE ROTATION OF PILOT SIGNAL |

ST911
| ACQUIRE CONTROL INFORMATION |

ST912
| ESTIMATE CHANNEL |

ST913
| PERFORM RECEIVING PROCESSING |

FIG.10

TRANSMITTING ANTENNA1

FIG.11A

TRANSMITTING ANTENNA2

FIG.11B

TRANSMITTING ANTENNA3

FIG.11C

TRANSMITTING ANTENNA4

FIG.11D

RECEIVING ANTENNAS1~4

COMMON PILOT (REFERENCE PHASE)

DEDICATED PILOT

f

t

FIG.12

EP 1 931 070 A1

FIG.13

TRANSMITTING ANTENNA1

f

PILOT (WITH PHASE ROTATION)

PILOT (REFERENCE PHASE)

0° PHASE ROTATION

null
null
null
null
null
null

. . .

t

FIG.14A

TRANSMITTING ANTENNA2

f

PILOT (WITH PHASE ROTATION)

PILOT (REFERENCE PHASE)

null
null

90° PHASE ROTATION

null
null
null
null

. . .

t

FIG.14B

TRANSMITTING ANTENNA3

f

PILOT (WITH PHASE ROTATION)

PILOT (REFERENCE PHASE)

null
null
null
null

180° PHASE ROTATION

null
null

· · ·

t

FIG.14C

TRANSMITTING ANTENNA4

f

PILOT (WITH PHASE ROTATION)

null
null
null
null
null
null

PILOT
(REFERENCE PHASE)

-90° PHASE ROTATION

· · ·

t

FIG.14D

FIG.15

EP 1 931 070 A1

FIG.16

EP 1 931 070 A1

| MODULATING SCHEME | | COMBINATION INFORMATION | | | |
|---|---|---|---|---|---|
| | | Tx1 | Tx2 | Tx3 | Tx4 |
| BPSK | 0 | $f_a$ | $f_b$ | $f_c$ | $f_d$ |
| | 1 | $f_a$ | $f_b$ | $f_d$ | $f_c$ |
| QPSK | 00 | $f_a$ | $f_c$ | $f_b$ | $f_d$ |
| | 01 | $f_a$ | $f_c$ | $f_d$ | $f_b$ |
| | 10 | $f_a$ | $f_d$ | $f_b$ | $f_c$ |
| | 11 | $f_a$ | $f_d$ | $f_c$ | $f_b$ |
| 16QAM | 0000 | $f_b$ | $f_a$ | $f_c$ | $f_d$ |
| | 0001 | $f_b$ | $f_a$ | $f_d$ | $f_c$ |
| | 0010 | $f_b$ | $f_c$ | $f_a$ | $f_d$ |
| | 0011 | $f_b$ | $f_c$ | $f_d$ | $f_a$ |
| | 0100 | $f_b$ | $f_d$ | $f_a$ | $f_c$ |
| | 0101 | $f_b$ | $f_d$ | $f_c$ | $f_a$ |
| | 0110 | $f_c$ | $f_a$ | $f_b$ | $f_d$ |
| | 0111 | $f_c$ | $f_a$ | $f_d$ | $f_b$ |
| | 1000 | $f_c$ | $f_b$ | $f_a$ | $f_d$ |
| | 1001 | $f_c$ | $f_b$ | $f_d$ | $f_a$ |
| | 1010 | $f_c$ | $f_d$ | $f_a$ | $f_b$ |
| | 1011 | $f_c$ | $f_d$ | $f_b$ | $f_a$ |
| | 1100 | $f_d$ | $f_a$ | $f_b$ | $f_c$ |
| | 1101 | $f_d$ | $f_a$ | $f_c$ | $f_b$ |
| | 1110 | $f_d$ | $f_b$ | $f_a$ | $f_c$ |
| | 1111 | $f_d$ | $f_b$ | $f_c$ | $f_a$ |

FIG.17

FIG.18

RECEIVED PILOT SIGNAL

401:PILOT DEMODULATING SECTION

251

PHASE DIFFERENCE
DETECTING SECTION

252

TRANSMITTING
ANTENNA SPECIFYING
SECTION

451

TRANSMISSION DATA
CONVERTING
SECTION

DEMODULATED DATA

RECEIVED PILOT SIGNAL

FIG.19

EP 1 931 070 A1

31

FIG.20

503:PILOT MODULATING SECTION

551

152-1

SUBCARRIER
ALLOCATING
SECTION

152-2

SUBCARRIER
ALLOCATING
SECTION

REDUNDANCY BIT →

REDUNDANCY BIT
CONVERTING
SECTION

152-3

SUBCARRIER
ALLOCATING
SECTION

152-4

SUBCARRIER
ALLOCATING
SECTION

TRANSMISSION PILOT SIGNAL

FIG.21

| MODULATING SCHEME | | COMBINATION INFORMATION | | | |
|---|---|---|---|---|---|
| | | Tx1 | Tx2 | Tx3 | Tx4 |
| 8PSK | 000 | $f_a$ | $f_b$ | $f_c$ | $f_d$ |
| | 001 | $f_a$ | $f_b$ | $f_d$ | $f_c$ |
| | 010 | $f_a$ | $f_c$ | $f_b$ | $f_d$ |
| | 011 | $f_a$ | $f_c$ | $f_d$ | $f_b$ |
| | 100 | $f_a$ | $f_d$ | $f_b$ | $f_c$ |
| | 101 | $f_a$ | $f_d$ | $f_c$ | $f_b$ |
| | 110 | $f_b$ | $f_a$ | $f_c$ | $f_d$ |
| | 111 | $f_b$ | $f_a$ | $f_d$ | $f_c$ |
| 16QAM | 0000 | $f_b$ | $f_c$ | $f_a$ | $f_d$ |
| | 0001 | $f_b$ | $f_c$ | $f_d$ | $f_a$ |
| | 0010 | $f_b$ | $f_d$ | $f_a$ | $f_c$ |
| | 0011 | $f_b$ | $f_d$ | $f_c$ | $f_a$ |
| | 0100 | $f_c$ | $f_a$ | $f_b$ | $f_d$ |
| | 0101 | $f_c$ | $f_a$ | $f_d$ | $f_b$ |
| | 0110 | $f_c$ | $f_b$ | $f_a$ | $f_d$ |
| | 0111 | $f_c$ | $f_b$ | $f_d$ | $f_a$ |
| | 1000 | $f_c$ | $f_d$ | $f_a$ | $f_b$ |
| | 1001 | $f_c$ | $f_d$ | $f_b$ | $f_a$ |
| | 1010 | $f_d$ | $f_a$ | $f_b$ | $f_c$ |
| | 1011 | $f_d$ | $f_a$ | $f_c$ | $f_b$ |
| | 1100 | $f_d$ | $f_b$ | $f_a$ | $f_c$ |
| | 1101 | $f_d$ | $f_b$ | $f_c$ | $f_a$ |
| | 1110 | $f_d$ | $f_c$ | $f_a$ | $f_b$ |
| | 1111 | $f_d$ | $f_c$ | $f_b$ | $f_a$ |

FIG.22

RECEIVED DATA

DECODING SECTION 603

DEMODULATING SECTION 602

P/S CONVERSION SECTION 207

RECEIVING PROCESSING SECTION 205

CHANNEL ESTIMATING SECTION 204

PILOT DEMODULATING SECTION 601

600

RF RECEIVING SECTION 202-1

RF RECEIVING SECTION 202-2

RF RECEIVING SECTION 202-3

RF RECEIVING SECTION 202-4

201-1

201-2

201-3

201-4

FIG.23

RECEIVED PILOT SIGNAL

601:PILOT DEMODULATING SECTION

251

252

651

| PHASE DIFFERENCE DETECTING SECTION | TRANSMITTING ANTENNA SPECIFYING SECTION | REDUNDANCY BIT CONVERTING SECTION |

REDUNDANCY BIT

RECEIVED PILOT SIGNAL

FIG.24

EP 1 931 070 A1

36

## INTERNATIONAL SEARCH REPORT

| International application No. |
| --- |
| PCT/JP2006/321542 |

A. CLASSIFICATION OF SUBJECT MATTER
*H04J15/00*(2006.01)i, *H04B7/04*(2006.01)i, *H04B7/12*(2006.01)i, *H04B7/26*
(2006.01)i, *H04J11/00*(2006.01)i

According to International Patent Classification (IPC) or to both national classification and IPC

B. FIELDS SEARCHED

Minimum documentation searched (classification system followed by classification symbols)
H04J15/00, H04B7/04, H04B7/12, H04B7/26, H04J11/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2004-512728 A (Samsung Electronics Co., Ltd.), 22 April, 2004 (22.04.04), Claim 10 & WO 2002/033841 A1 & US 2002/0085619 A1 & AU 1104002 A & EP 1234385 A1 & BR 107344 A & KR 2031614 A & CN 1394392 A & KR 438447 B & JP 3786919 B2 | 1-12 |
| A | WO 2004/075451 A1 (Mitsubishi Electric Corp.), 02 September, 2004 (02.09.04), Claim 1; Figs. 1 to 3 & EP 1589684 A1 | 1-12 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 10 November, 2006 (10.11.06) | 21 November, 2006 (21.11.06) |

| Name and mailing address of the ISA/ Japanese Patent Office | Authorized officer |
| --- | --- |
| Facsimile No. | Telephone No. |

Form PCT/ISA/210 (second sheet) (April 2005)

**INTERNATIONAL SEARCH REPORT**

International application No.

PCT/JP2006/321542

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2004/038988 A2  (QUALCOMM INC.),<br>06 May, 2004 (06.05.04),<br>Full text<br>& JP 2006-504370 A      & JP 2006-504335 A<br>& JP 2006-504336 A      & JP 2006-504338 A<br>& JP 2006-504339 A      & JP 2006-504340 A<br>& JP 2006-504341 A      & JP 2006-504342 A<br>& JP 2006-504366 A      & JP 2006-504367 A<br>& JP 2006-504372 A      & US 2004/0179627 A1<br>& US 2004/0081073 A1    & US 2004/0081131 A1<br>& US 2004/0082356 A1    & US 2004/0085939 A1<br>& US 2004/0087324 A1    & US 2004/0120411 A1<br>& US 2004/0136349 A1    & US 2004/0137863 A1<br>& US 2004/0146018 A1    & US 2004/0156328 A1<br>& US 2005/0128953 A1    & US 2006/0039275 A1<br>& US 2004/0131007 A1    & EP 1556985 A<br>& EP 1556980 A          & EP 1556981 A<br>& EP 1556983 A          & EP 1556984 A<br>& EP 1557003 A          & EP 1557017 A<br>& EP 1557022 A          & EP 1559209 A<br>& EP 1559231 A          & EP 1582032 A<br>& EP 1615384 A          & EP 1619817 A<br>& EP 1582042 A          & WO 2004/038988 A2<br>& WO 2004/038951 A2     & WO 2004/038952 A2<br>& WO 2004/038984 A2     & WO 2004/038985 A2<br>& WO 2004/038986 A2     & WO 2004/038987 A2<br>& WO 2004/038989 A2     & WO 2004/039011 A2<br>& WO 2004/039022 A2     & WO 2004/039027 A2<br>& WO 2004/064295 A2 | 1-12 |

Form PCT/ISA/210 (continuation of second sheet) (April 2005)

**EP 1 931 070 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005314621 A